(19) **Europäisches Patentamt**
**European Patent Office**
**Office européen des brevets**

(11) **EP 1 497 609 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(21) Anmeldenummer: **03746157.1**

(22) Anmeldetag: **02.04.2003**

(51) Int Cl.:
**G01B 1/00** (2006.01)

(86) Internationale Anmeldenummer:
**PCT/EP2003/003421**

(87) Internationale Veröffentlichungsnummer:
**WO 2003/087706 (23.10.2003 Gazette 2003/43)**

(54) **OPTISCHE POSITIONSMESSEINRICHTUNG**

OPTICAL POSITION MEASURING DEVICE

DISPOSITIF OPTIQUE DE MESURE DE POSITION

(84) Benannte Vertragsstaaten:
**AT BE BG CH CY CZ DE DK EE ES FI FR GB GR HU IE IT LI LU MC NL PT RO SE SI SK TR**

(30) Priorität: **17.04.2002 DE 10217726**

(43) Veröffentlichungstag der Anmeldung:
**19.01.2005 Patentblatt 2005/03**

(73) Patentinhaber: **Dr. Johannes Heidenhain GmbH 83292 Traunreut (DE)**

(72) Erfinder:
• **BENNER, Ulrich 83308 Trostberg (DE)**
• **MAYER, Elmar 83365 Nussdorf (DE)**

(56) Entgegenhaltungen:
**US-A- 5 774 219          US-B1- 6 172 753**

**Beschreibung**

Die Erfindung bezieht sich auf eine optische Positionsmesseinrichtung gemäß dem Oberbegriff des Anspruchs 1.

Optische Positionsmesseinrichtungen enthalten eine Abtasteinheit und einen relativ zur Abtasteinheit in Messrichtung beweglichen Maßstab, auf dem ein Strichgitter oder mehrere Strichgitter mit einer periodischen Gitterstruktur für eine inkrementale bzw. absolute Messung der Relativbewegung zwischen dem Maßstab und der Abtasteinheit angeordnet ist bzw. sind. Die Abtasteinheit umfasst einen sendeseitigen Teil mit einer auf einer Platine angeordneten Lichtquelle, vorzugsweise einer lichtemittierenden Diode und einer der Lichtquelle zugeordneten Kollimatoroptik. Im empfangsseitigen Teil der Abtasteinheit ist auf der Platine ein photoelektrischer Detektor oder Photosensor mit verschiedenen aktiven, strahlungsempfindlichen Detektorbereichen vorgesehen.

Die Präzision und Messgüte, die Unempfindlichkeit gegenüber Verschmutzungen und mechanische Veränderungen des Maßstabes, die Baugröße sowie die Herstellungskosten einer optischen Positionsmesseinrichtung der vorstehend genannten Art hängen in entscheidendem Maße von der Art und Güte der in der Abtasteinheit verwendeten Linsenoptik ab, die eine Abbildung des Maßstabgitters auf den strahlungsempfindlichen periodischen Detektorbereichen erzeugt. Dabei bestimmt vor allem die Baugröße der Abtasteinheit die Größe der optischen Positionsmesseinrichtung. Die Herstellungskosten werden zu einem erheblichen Teil von den Kosten des photoelektrischen Detektors bestimmt, der dann kostengünstig hergestellt werden kann, wenn er für unterschiedliche Messverfahren eingesetzt werden kann.

Als Messverfahren zur optischen Positionsmessung wird zum einen das sogenannte "Durchlicht-Messverfahren", bei dem die Lichtquelle, die Linsenoptik und die Abtastplatte auf der einen Seite und der photoelektrische Detektor auf der anderen Seite des Maßstabes angeordnet sind, und zum anderen das sogenannte "Auflicht-Messverfahren" eingesetzt, bei dem die Lichtquelle, die Linsenoptik, die Abtastplatte und der photoelektrische Detektor auf einer Seite des Maßstabes angeordnet sind. Die Bereitstellung eines für beide Messverfahren geeigneten photoelektrischen Detektors würde die Herstellung hoher Stückzahlen und damit niedrige Herstellungskosten ermöglichen. Dies erfordert jedoch einen speziellen Eingriff in den Abtaststrahlengang, da anders als beim Durchlicht-Messverfahren, wo der photoelektrische Detektor unmittelbar neben dem Maßstab zur Erfassung der periodischen Gitterstruktur angeordnet werden kann, der photoelektrische Detektor beim Auflicht-Messverfahren weiter vom Maßstab beabstandet ist, so dass zur Erzeugung eines scharfen Abbildes des Maßstabgitters auf den periodischen, strahlungsempfindlichen Detektorbereichen eine spezielle Abbildungsoptik erforderlich ist, um das periodische Maßstabgitter mit einem definierten Abbildungsmaßstab auf den photoelektrischen Detektor abzubilden.

Die erforderliche Abbildungsoptik kann beispielsweise durch eine einzelne Linse realisiert werden, die wegen des erforderlichen großen Bildfeldes jedoch entsprechend groß baut und für eine möglichst kompakte Abtasteinheit nicht in Betracht kommt.

Aus der GB 2 056 660 ist eine Abbildungsoptik in der Abtasteinheit einer optischen Positionsmesseinrichtung bekannt, die nach Art eines Linsenarrays ausgebildet ist. Die optische Abtasteinheit enthält eine in einer ersten Kammer angeordnete lichtemittierende Diode, von der über eine Kondensorlinse Lichtstrahlen an den Maßstab abgegeben und von diesem über die ebenfalls als Kondensorlinse ausgebildete Linsenoptik auf einen in einer zweiten, neben der ersten Kammer angeordneten Kammer vorgesehenen Lichtsensor reflektiert werden. Grundsätzlich kann mittels einer als Linsenarray ausgebildeten Abbildungsoptik ein kleiner bauendes Gesamtsystem ausgebildet werden.

Die GB 2056 660 enthält jedoch keine Hinweise, wie ein derartiges Linsenarray als Abbildungsoptik im Abtaststrahlengang einer optischen Positionsmesseinrichtung konkret auszubilden ist, insbesondere wenn ein bestimmter Abbildungsmaßstab vorgegeben ist, mit dem z.B. ein periodisches Maßstabgitter auf eine periodische Detektoranordnung abzubilden ist.

US 6 172 753 offenbart auch eine Positionsmesseinrichtung die Linsenarrays enthält.

Der vorliegenden Erfindung liegt die Aufgabenstellung zugrunde, eine möglichst universell anwendbare Vorschrift für die Gestaltung eines kompakt aufgebauten Linsenarrays anzugeben, das im Abtaststrahlengang einer optischen Positionsmesseinrichtung ein periodisches Gitter mit einem vorgegebenen Abbildungsmaßstab auf eine Abbildungsebene abbildet.

Diese Aufgabe wird erfindungsgemäß durch die Merkmale des Anspruchs 1 gelöst.

Die erfindungsgemäße Lösung stellt eine universell anwendbare Vorschrift für die Gestaltung eines kompakt bauenden Linsenarrays zur Verfügung, das im Abtaststrahlengang einer optischen Positionsmesseinrichtung ein periodisches Gitter mit einem vorgegebenen Abbildungsmaßstab auf eine Abbildungsebene abbildet.

Die erfindungsgemäße Lösung geht von der Erkenntnis aus, dass Linsenarrays und insbesondere die lineare, periodische Anordnung identischer Linsen in einem bestimmten Raster den Vorteil kleiner Brennweiten und kleiner Bauhöhe bei gleichzeitig großen aus-geleuchteten Flächen bei der optischen Abbildung gegenüber Einzellinsen aufweisen.

Zwar kann die aus der GB 2 056 660 A bekannte Linsenoptik bei einer Anordnung mehrerer lichtemittierender Dioden und lichtempfindlicher Sensoren mit den dazugehörigen Kondensorlinsen als Linsenarray angesehen werden jedoch ist einem derartigen Linsenarray wegen der fehlenden geometrischen Zuordnung der Linsenoptik zu der Periodizität der Gitterstruktur des Maßstabes und zum Abbildungsmaßstab nicht zu entnehmen, wie eine für eine präzise Messung erforderliche hochgenaue Abbildung des Maßstabgitters auf der Abbildungsebene bzw. auf einem photoelektrischen Detektor erfolgen soll.

Bei der Abbildung von Gitterstrukturen mittels Linsenarrays tritt das Problem auf, dass jede Linse oder Mikrolinse eine lokale Abbildung erzeugt, so dass an den Abbildungsgrenzen beim Übergang zur benachbarten Linse Phasenverschiebungen zwischen den Abbildungen der Gitterstrukturen auftreten können. Unter Berücksichtigung, des erforderlichen Abbildungsmaßstabes muss daher eine auf die Gitterperiode des abzubildenden Gitters optimierte Periodizität des Linsenarrays ermittelt werden, um zu gewährleisten, dass die Abbildung des Gitters wieder ein kontinuierliches Gitter ergibt, d.h. eine phasengleiche Überlappung bzw. Übereinstimmung von Gitterstegen und Lücken des von der einen Linse abgebildeten Gitters mit den Gitterstegen und Lücken des benachbarten Gitters sichergestellt ist.

Ist eine solche phasengleiche Überlappung durch eine entsprechenden Gesetzmäßigkeit bei der Festlegung des optimierten Abstandes zwischen benachbarten Linsen und damit eine optimale Periodizität der Linsenanordnung unter Berücksichtigung vorgegebener geometrischer Randbedingungen sichergestellt, so ist auch gewährleistet, dass der das in der Abbildungsebene abgebildete - ungestörte - Gitter abtastende photoelektrische Detektor oder ein weiterführendes optisches System exakte Stellungs- oder Bewegungssignale generiert.

Dementsprechend setzt sich die erfindungsgemäße Lösung aus der Kombination einer aus einem periodischen Linsenarray gebildeten Linsenoptik und der Angabe eines optimalen gegenseitigen Abstandes benachbarter Linsen bzw. einer optimalen Gitterperiode des periodischen Linsenarrays zusammen.

Die Dimensionierungsregel für die Periodizität $A_G(r)$ des Linsenarrays lautet in allgemeiner, sowohl für lineare als auch für radiale Positionsmesseinrichtungen gültiger Form:

$$A_G(r) = \frac{|\beta(r)| * [t(r) * [k + i + n] + \psi]}{(|\beta(r)| + 1)}$$

mit

$A_G(r)$     der Gitterperiode des Linsenarrays,
$t(r)$     der Periode der periodischen Gitterstruktur,
$|\beta(r)|$     dem Absolutbetrag des Abbildungsmaßstabes $\beta$ des Linsenarrays (80),
$\psi$     einem vorgebbaren, definierten Phasensprung,
$r$     dem Radius der Gitteranordnung, wobei für den Fall eines linearen Gitters $r = \infty$ und $A_G$, $t$ und $|\beta|$ Konstanten sind,
$i, k, n$     $\in$ N, d.h. natürlichen Zahlen einschließlich Null.

Diese Dimensionierungsregel für den gegenseitigen Abstand $A_G(r)$ benachbarter Linsen berücksichtigt auch die Möglichkeit, in den erzeugten Abbildungen benachbarter Linsen definierte Phasensprünge $\psi$ zu erzeugen, so dass die Dimensionierungsregel den allgemeinsten Fall der Bestimmung der Gitterperiode $A_G(r)$ eines periodischen linearen oder radialen Linsenarrays unter Berücksichtigung vorgegebener geometrischer Randbedingungen darstellt.

Durch einen gezielt einstellbaren Phasensprung $\psi$ in den Abbildungsbereichen einander benachbarter Linsen des Linsenarrays kann die Phasenlage von Signalen bestimmt werden, die beispielsweise in der Abbildungsebene angeordnete photoelektrische Detektoren erzeugen. Damit lassen sich u.a. um 90° elektrisch versetzte Signale zur Auswertung einer Positionsmessung erzeugen.

Weiterhin kann durch einen **Phasensprung** $\psi$ im Überlappungsbereich der Abbildungen benachbarter Linsen des Linsenarrays ein gezieltes Verhältnis zwischen den Breiten der Hell- und Dunkelbereiche eingestellt werden, wodurch der Obervuellengehalt der aus den Breiten der Hell- und Dunkelbereiche gewonnen Signale eines photoelektrischen Detektors gezielt beeinflusst werden kann.

Da mit Hilfe strukturierter Abtastplatten oftmals die Phasenbeziehungen zwischen den registrierten Abtastsignalen der jeweils zugeordneten Detektoren eingestellt werden, kann bei einem derart ausgelegten Linsenarray sogar auf eine strukturierte Abtastplatte im Abtaststrahlengang einer optischen Positionsmesseinrichtung verzichtet werden.

Bei einer linearen Positionsmeßeinrichtung wird die oben angegebene Dimensionierungsregel für die Periodizität $A_G$ des Linsenarrays zu

$$A_G = \frac{|\beta| *[t *[k + i + n] + \psi]}{(|\beta| + 1)}$$

mit

$A_G$      der Gitterperiode des Linsenarrays,

t      der Periode der periodischen Gitterstruktur,

$|\beta|$      dem Absolutbetrag des Abbildungsmaßstabes $\beta$ des Linsenarrays (80),

$\psi$      einem vorgebbaren, definierten Phasensprung,

i, k, n      $\in$ N, d.h. natürlichen Zahlen einschließlich Null.

Vorzugsweise beträgt der Phasensprung ein Bruchteil oder ein Vielfaches der Periode der in der Abbildungsebene abgebildeten periodischen Gitterstruktur.

Im Falle der Abbildung einer periodischen Gitterstruktur ohne resultierende Phasensprünge zwischen den Abbildungen benachbarter Linsen ist die Gitterperiode aus der nachstehenden Dimensionierungsregel

$$A_G(r) = \frac{|\beta(r)| *t(r) *[k + i + n]}{(|\beta(r)| + 1)}$$

mit

$A_G(r)$      der Gitterperiode des Linsenarrays,

t(r)      der Periode der periodischen Gitterstruktur,

$|\beta(r)|$      dem Absolutbetrag des Abbildungsmaßstabes $\beta$ des Linsenarrays (80),

r      dem Radius der Gitteranordnung, wobei für ein lineares Gitter r = $\infty$ ist und $A_G$, t und $|\beta|$ Konstanten sind,

i, k, n      $\in$ N, d.h. natürlichen Zahlen einschließlich Null.

zu bestimmen.

Auch diese Dimensionierungsregel für das Design eines Linsenarrays kann sowohl in linearen als auch in radialen Positionsmeßeinrichtungen eingesetzt werden. Für die Abbildung der periodischen Gitterstruktur ohne resultierende Phasensprünge zwischen den Abbildungen benachbarter Linsen beträgt die Gitterperiode für eine lineare Positionsmeßeinrichtung

$$A_G = \frac{|\beta| *t *[k + i + n]}{(|\beta| + 1)}$$

mit

$A_G$      der Gitterperiode des Linsenarrays,

t      der Periode des Maßstabgitters (10),

$|\beta|$      dem Absolutbetrag des Abbildungsmaßstabes $\beta$ des Linsenarrays (80),

i, k, n      $\in$ N, d.h. natürlichen Zahlen einschließlich Null

Um bei der Festlegung eines optimalen Abstandes zwischen-benachbarten Linsen oder Mikrolinsen physikalische und/oder technische Randbedingungen wie eine numerische Apertur sowie technologische Beschränkungen zu berücksichtigen, kann die Breite der Linsen des Linsenarrays aus der Beziehung

$$B_L(r) = \frac{|\beta(r)| \cdot t(r) \cdot m}{(|\beta(r)| + 1)}$$

bestimmt werden, mit

| | |
|---|---|
| $B_L(r)$ | der Linsenbreite, |
| $t(r)$ | der Periode der periodischen Gitterstruktur, |
| $|\beta(r)|$ | dem absoluten Betrag des Abbildungsmaßstabes $\beta$ des Linsenarrays (8), |
| $r$ | dem Radius der Gitteranordnung, der für $r = \infty$ ein lineares Gitter charakterisiert, für das $B_L$, $\beta$ und t Konstanten sind. |
| $m$ | $\in N$. |

Diese Dimensionierungsregel ergibt eine Mindest-Linsenbreite bei der Festlegung einer optimalen Periodizität des Abbildungsgitters eines linearen oder radialen Linsenarrays.

Zur Festlegung eines optimalen Abstandes zwischen benachbarten Linsen oder Mikrolinsen einer linearen Positionsmeßeinrichtung unter Berücksichtigung physikalischer und/oder technischer Randbedingungen sowie technologischer Beschränkungen wird die Breite der Linsen aus der Beziehung

$$B_L = \frac{|\beta| \cdot t \cdot m}{(|\beta| + 1)}$$

bestimmt.

Die erfindungsgemäße Lösung kann sowohl für die unmittelbare Abbildung eines periodischen Maßstabgitters als auch im Abtaststrahlengang eines optischen Positionsmeßsystems eingesetzt werden, bei dem z.B. in einer Zwischenbildebene durch Wechselwirkung mehrerer vorher durchlaufener Gitterteilungen ein "virtuelles" Streifenmuster erzeugt wird und eine Abbildung eines derartigen virtuellen Streifenmusters mit einem bestimmten Abbildungsmaßstab in einer Abbildungsebene erforderlich ist.

In der Abbildungsebene des mit einer optimalen Periodizität der abgebildeten Gitterstruktur versehenen Linsenarrays kann wahlweise auch ein photoelektrischer Detektor angeordnet oder die Abbildungsebene kann einem weiterführenden optischen System zugeordnet werden.

Die Verwendung eines periodischen Linsenarrays, dessen Gitterperiode nach der erfindungsgemäßen Dimensionierungsregel bestimmt wird, schafft die Voraussetzung für die Verwendung gleichartiger bzw. baugleicher Detektor-Systeme oder weiterführender optischer Systeme für optische Positionsmesseinrichtungen, die nach dem Auflicht-Messverfahren oder nach dem Durchlicht-Messverfahren arbeiten und damit die kostengünstige Herstellung entsprechender optischer Messeinrichtungen. Damit ergibt sich auch die Möglichkeit, dass nach der Erfindung ausgebildete lineare und periodische Linsenarrays in einer optischen Positionsmesseinrichtung für eine photoelektrische Abtastung nach dem Auflicht-Messverfahren eingesetzt und die Abbildungsebene und die Lichtquelle auf einer gemeinsamen Leiterplatte angeordnet werden.

Um ein derartiges "virtuelles" Streifenmuster - beispielsweise ein sog. Vernier-Streifenmuster - in einer Zwischenbildebene des Abtaststrahlenganges zu erzeugen, kann im Abtaststrahlengang auf Seiten der Abtasteinheit eine Abtastplatte mit einer Gitterstruktur angeordnet werden, die eine Gitterkonstante aufweist, die geringfügig von der Gitterkonstanten des Maßstabgitters abweicht, so dass in an sich bekannter Weise aus der Wechselwirkung der beiden Gitterstrukturen das virtuelle Streifenmuster in einer Zwischenbildebene erzeugt wird, welches wiederum über die Linsenoptik abgebildet wird.

Eine vorteilhafte Weiterbildung der erfindungsgemäßen Lösung ist dadurch gekennzeichnet dass die Leiterplatte winklig zur Ebene des Maßstabs bzw. Maßstabgitters derart angeordnet ist, dass die von der Lichtquelle ausgehenden Lichtstrahlen an einer senkrecht zum Maßstab angeordneten Reflexionsfläche reflektiert, über eine Kondensorlinse auf das Maßstabgitter geworfen, dort reflektiert und über die Abtastplatte und mittels des im Wesentlichen parallel zu Leiterplatte angeordneten Linsenarrays das Maßstabgitter mit dem Abbildungsmaßstab der Abbildungsebene abbilden.

Anhand von in der Zeichnung dargestellten Ausführungsbeispielen soll der der Erfindung zugrundeliegende Gedanke näher erläutert werden. Es zeigen:

Fig. 1 - eine schematische Darstellung eines Maßstabes und einer Abtasteinheit einer nach dem Auflicht-Messverfahren arbeitenden optischen Positionsmesseinrichtung;

Fig. 2 - eine schematische Darstellung zweier benachbarter Linsen eines linearen, periodischen Linsenarrays zur Erzeugung eines Abbildes einer periodischen Gitterstruktur,

Fig. 3 - eine schematische Darstellung der Abbildung einer periodischen Gitterstruktur mit einem linearen Linsenarray mit nach der erfindungsgemäßen Dimensionierungsregel bestimmter Periodizität,

Fig. 4 - eine schematische Darstellung der Abbildung einer periodischen Gitterstruktur mit einem linearen Linsenarray mit nicht der erfindungsgemäßen Dimensionierungsregel entsprechender Periodizität und

Fig. 5 - eine schematische Darstellung der Abbildung einer radialen periodischen Gitterstruktur mit einem radialen Linsenarray.

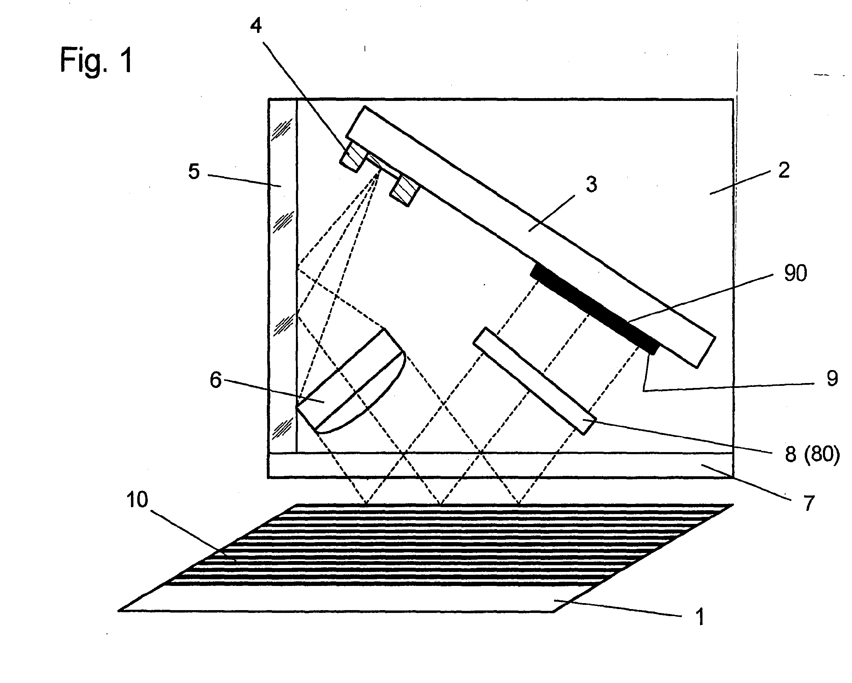

Fig. 1 zeigt in schematischer Darstellung als Teile einer nach dem Auflicht-Messverfahren arbeitenden optischen Positionsmesseinrichtung einen Maßstab 1 mit einem quer zur Abtastrichtung verlaufenden Maßstabgitter 10 und eine relativ zum Maßstab 1 bewegliche Abtasteinheit 2. Das Maßstabgitter 10 besteht aus einem linearen, periodischen Strichgitter, das in dem Ausführungsbeispiel gemäß Fig. 1 als Inkrementalspur eines linearen Positionsmesssystems dargestellt ist. Alternativ kann das auf dem Maßstab 1 angeordnete Strichgitter aus einem inkrementalen Strichgitter und einem Strichgitter zusammengesetzt sein, das eine vorgegebene Teilungsperiode aufweist und absolute Positionswerte liefert.

Die Abtasteinheit 2 enthält eine Leiterplatte 3, die in einem vorgegebenen Winkel zur Ebene des Maßstabes 1 in einem Abtastgehäuse angeordnet ist. Auf der Leiterplatte 3 sind eine Lichtquelle 4 in Form einer lichtemittierenden Diode sowie im Abstand zur Lichtquelle 4 ein photoelektrischer Detektor 9 angeordnet, der abwechselnd strahlungsempfindliche Bereiche und strahlungsunempfindliche Lücken aufweist, deren Ausrichtung der Ausrichtung des Maßstabgitters 10 angepasst ist. Der photoelektrische Detektor 9 kann beispielsweise entsprechend dem aus der DE 100 22 619 A1 bekannten strukturierten opto-elektronischen Photodetektor ausgebildet sein.

Die der Lichtquelle 4 zugewandte Seitenwand des Gehäuses der Abtasteinheit 2 ist als Reflexionsfläche 5 verspiegelt ausgebildet-und reflektiert die von der Lichtquelle 4 ausgehenden Strahlen über eine Kondensorlinse 6 und eine parallel zum Maßstab 1 angeordnete, die Bodenfläche des Abtastgehäuses bildende Glasplatte 7 auf das Maßstabgitter 10.

Die Glasplatte 7 kann ein Abtastgitter mit einer der Gitterstruktur aufweisen, die geringfügig von der Gitterkonstanten des Maßstabgitters abweicht, so dass aus der Wechselwirkung der beiden Gitterstrukturen ein virtuelles Streifenmuster - beispielsweise ein sog. Vernier-Streifenmuster - in einer Zwischenbildebene erzeugt wird, welches wiederum über die Linsenoptik abgebildet wird.

Vom Maßstabgitter 10 gelangen die Lichtstrahlen auf eine Linsenoptik 8, die gemäß der Erfindung aus einem linearen, periodischen Linsenarray 80 besteht. Das Linsenarray bildet mit einem vorgegebenen Abbildungsmaßstab $\beta$ das Maßstabgitter 10 auf die Abbildungsebene 9 der Leiterplatte 3 ab, auf der in dem Ausführungsbeispiel ein photoelektrischer Detektor 90 angeordnet ist und die Hell-Dunkel-Modulationen bei der Relativbewegung zwischen der Abtasteinheit 2 und dem Maßstab 1 in entsprechende elektrische Signale umsetzt.

Die in der Linsenoptik 8 bzw. dem Linsenarray 80 verwendeten Einzellinsen können hierbei als refraktive oder als diffraktive optische Elemente ausgebildet sein.

Alternativ zu dem in Figur 1 dargestellten photoelektrischen Detektor 90 kann in der Abbildungsebene 9 auch ein optisches Element oder eine Abbildungsebene eines weiterführenden optischen Systems vorgesehen sein.

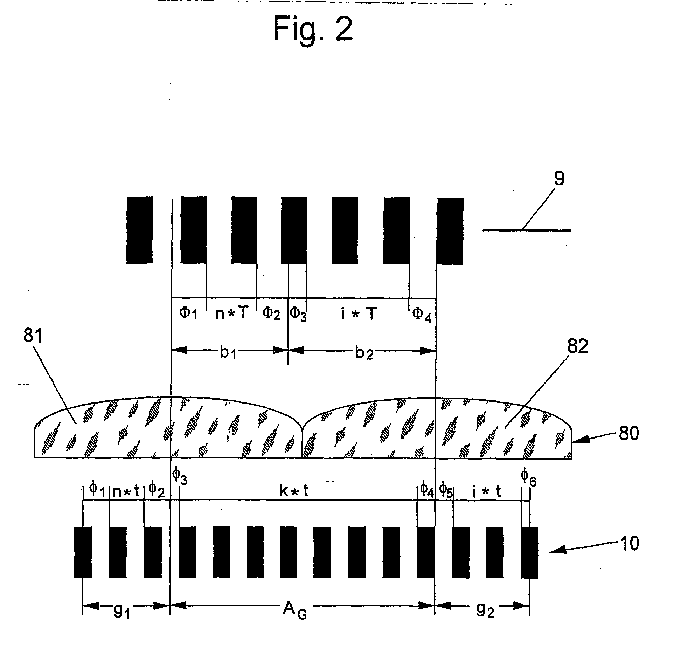

Damit die periodische Gitterstruktur des Maßstabgitters 10 als periodisches, kontinuierliches Gitter durch das Linsenarray 80 in der Abbildungsebene 9 mit phasengleicher Überlappung, d.h. Übereinstimmung von Gitterstegen und Lücken des von der einen Linse des Linsenarrays 80 abgebildeten Teils des Maßstabgitters mit den Gitterstegen und. Lücken des durch die benachbarte Linse abgebildeten Teils des Maßstabgitters 10 sichergestellt ist, muss unter Berücksichtigung des Abbildungsmaßstabes $\beta$ und der effektiven Gitterperiode des Maßstabgitters 10 das Linsenarray 80 eine bestimmte Periodizität aufweisen. Die Dimensionierungsregel zur Bestimmung einer optimalen Periodizität des Linsenarrays 80 wird nachfolgend anhand der schematischen Darstellung in Figur 2, in der zwei benachbarte Linsen 81, 82 eines linearen Linsenarrays 80 zur Abbildung eines Maßstabgitters 10 in einer Abbildungsebene 9 dargestellt sind, rechnerisch ermittelt.

Fig. 2 zeigt in einem Ausschnitt aus dem linearen Linsenarray 80 zwei benachbarte, in einem Linsenabstand $A_G$ zueinander angeordnete Linsen 81, 82 des Linsenarrays 80, die das auf einem Maßstab angebrachte Maßstabgitter 10, das eine Gitterperiode t aufweist, mit dem Abbildungsmaßstab β in ein Gitter der Periode T = β*t in der Abbildungsebene 9 abbilden, in der beispielsweise ein photoelektrischer Detektor 90 gemäß Fig. 1 angeordnet ist, oder die einem weiterführenden optischen System zugeordnet ist.

Der den Linsen 81, 82 des Linsenarrays 80 zugeordnete Teil des Maßstabgitters 10 besteht aus den Höhen $g_1$, $g_2$ und dem Abstand $A_G$ der benachbarten Linsen 81, 82 und setzt sich aus Vielfachen der Gitterperiode t und "Restbeträgen" $\phi_1$ bis $\phi_6$, die kleiner als die Gitterperiode t sind, zusammen. Dabei überträgt die linke Linse 81 des Linsenarrays 80 die Gittersequenz der Höhe $g_1$ des Maßstabgitter 10 in eine Abbildungssequenz der Höhe $b_1$ in der Abbildungsebene 9 und die rechte Linse 82 des Linsenarrays 80 die Gittersequenz der Höhe $g_2$ in die Abbildungssequenz der Höhe $b_2$ in der Abbildungsebene 9, wobei die Abbildung des Maßstabgitters 10 in der Abbildungsebene 9 aus den Höhen $b_1$ und $b_2$ besteht und sich aus Vielfachen der Gitterperiode T und "Restbeträgen" $\Phi_1$ bis $\Phi_4$, die kleiner als die Gitterperiode T sind, zusammensetzt.

Damit sich die von den Linsen 81, 82 des Linsenarrays 80 in der Abbildungsebene 9 abgebildeten Gitter phasengleich zu einem durchgehenden Gitter ergänzen bzw. überlappen, gelten folgende Bedingungen:

$$(1) \quad A_G = b_1 + b_2 = \Phi_1 + \Phi_2 + n^*T + \Phi_3 + \Phi_4 + i^*T$$

$$(2) \quad b_2 = |\beta|^*g_2 = |\beta|^*(\phi_5 + \phi_6 + i^*t)$$

$$(3) \quad b_1 = |\beta|^*g_1 = |\beta|^*(\phi_1 + \phi_2 + n^*t)$$

$$(4) \quad A_G = k^*t + \phi_3 + \phi_4$$

$$(5) \quad \phi_2 + \phi_3 = t$$

$$(6) \quad \phi_4 + \phi_5 = t$$

$$(7) \quad T = \Phi_2 + \Phi_3 = |\beta|^*(\phi_1 + \phi_6)$$

$$(8) \quad T = |\beta|^*t$$

Wobei n, i und k natürliche Zahlen einschließlich Null sind.

Aus der Gleichsetzung der Gleichungen (1) und (4) ergibt sich unter Berücksichtigung der Gleichungen (2), (3) und (7):

$$|\beta|*(\phi_1 + \phi_2 + n*t) + |\beta|*(\phi_5 + \phi_6 + i*t) = k*t + \phi_3 + \phi_4$$

$$|\beta|*(n + i)*t + |\beta|*(\phi_1 + \phi_6) + |\beta|*(\phi_2 + \phi_5) = k*t + \phi_3 + \phi_4$$

mit

$$T = \Phi_2 + \Phi_3 = |\beta|*(\phi_1 + \phi_6) = |\beta|*t$$

folgt

$$|\beta|*(n + i)*t + |\beta|*t + |\beta|*(\phi_2 + \phi_5) = k*t + \phi_3 + \phi_4$$

$$|\beta|*(n + i + 1)*t + |\beta|*(\phi_2 + \phi_5) = k*t + \phi_3 + \phi_4$$

$$(9) \quad |\beta|*(i + n + 1)*t + |\beta|*(\phi_2 + \phi_5) = k*t + \phi_3 + \phi_4$$

Addiert man zur Gleichung (9) die Summe $(\phi_2 + \phi_5)$, erhält man mit den Gleichungen (5) und (6):

$$|\beta|*(i + n + 1)*t + |\beta|*(\phi_2 + \phi_5) + (\phi_2 + \phi_5) = k*t + \phi_3 + \phi_4 + (\phi_2 + \phi_5)$$

$$(|\beta| + 1)*(\phi_5 + \phi_2) + |\beta|*t*(i + n + 1) = (k + 2)*t$$

oder

$$(10) \quad (\phi_2 + \phi_5) = [(k + 2)*t - |\beta|*t*(i + n + 1)] / (|\beta| + 1)$$

Addiert man zur Gleichung (4) $(\phi_2 + \phi_5)$, so erhält man

$$A_G + (\phi_2 + \phi_5) = k*t + \phi_3 + \phi_4 + (\phi_2 + \phi_5)$$

Mit den Gleichungen (5) und (6) folgt daraus:

$$A_G = (k + 2)*t - (\phi_2 + \phi_5)$$

Mit Gleichung (10) ist:

$$A_G = (k + 2)*t - [(k + 2)*t - |\beta|*t*(i + n + 1)] / (|\beta| + 1)$$

Daraus ergibt sich schließlich als Lösung für die Gitterperiode oder den gegenseitigen Abstand der benachbarten Linsen 81, 82 des linearen, periodischen Linsenarrays 80 zur Abbildung eines durchgehenden, sich aus einander phasengleich überlappenden Abbildungs-Teilgittern zusammensetzenden Gitters:

$$A_G = \frac{|\beta| * t * (k + i + n + 3)}{(|\beta| + 1)}$$

bzw.

$$(11) \qquad A_G = \frac{|\beta| * t * (k + i + n)}{(|\beta| + 1)}$$

mit

$A_G$     der Gitterperiode des Linsenarrays 80,
$t$     der Periode des Maßstabgitters 10,
$|\beta|$     dem absoluten Betrag des Abbildungsmaßstabes $\beta$ des Linsenarrays 80 und
$i, k, n$     natürlichen Zahlen einschließlich der Ziffer Null.

Um ein Maßstabgitter der Periode t mit dem Abbildungsmaßstab $\beta$ mittels des Linsenarrays 80 optisch so abzubilden, dass ein Gitter der Periode $T = |\beta|*t$ entsteht, das keine Phasensprünge, -lücken etc. aufweist, müssen demzufolge die benachbarten Linsen 81, 82 des Linsenarrays 80 einen Abstand $A_G$ entsprechend der vorstehenden Beziehung (11) aufweisen.

Durch einen gezielt vorgebbaren Phasensprung $\Psi$ im Bildraum zwischen den Abbildungen zweier benachbarter Linsen 81, 82 des Linsenarrays 80 lassen sich für die Auswertung des in der Abbildungsebene 9 abgebildeten Gitters gewünschte Effekte einstellen. So kann durch den gezielt einstellbaren Phasensprung $\Psi$ in der Abbildungsebene 9 die Phasenlage von Signalen, die ein in der Abbildungsebene 9 angeordneter photoelektrischer Detektor 90 gemäß Fig. 1, beispielsweise ein Mehrfelddetektor, erzeugt, auf beispielsweise 90° bestimmt werden. Außerdem lässt sich im Überlappungsbereich der Gitterabbildungen der benachbarten Linsen 81, 82 ein gezieltes Verhältnis zwischen den Breiten der Hell- und Dunkelbereiche einstellen, womit der Oberwellengehalt der daraus gewonnenen Signale des Detektors 90 gezielt beeinflusst werden kann.

Für die Einbeziehung eines gewünschten Sprunges $\Psi$ ändert sich lediglich die oben aufgeführte Gleichung (1) zu:

$$(1') \quad A_G = b_1 + b_2 + \Psi = \Phi_1 + \Phi_2 + n*T + \Phi_3 + \Phi_4 + i*T + \Psi$$

mit $\Psi=|\beta|*\psi$

Daraus ergibt sich die allgemeingültige Form für die Gitterperiode oder den gegenseitigen Abstand der benachbarten Linsen 81, 82 des linearen, periodischen Linsenarrays 80 zur Abbildung eines durchgehenden, sich aus einander phasengleich überlappenden Abbildungs-Teilgittern zusammensetzenden Gitters zu:

$$(12) \qquad A_G = \frac{|\beta|*(t*(k + i + n) + \psi)}{(|\beta| + 1)}$$

mit

$A_G$      der Gitterperiode des Linsenarrays 80,
**t**      der Periode des Maßstabgitters 10,
$|\beta|$      dem absoluten Betrag des Abbildungsmaßstabes $\beta$ des Linsenarrays 80,
$\psi$      einem vorgebbaren, definierten Phasensprung und
**i, k, n**      natürlichen Zahlen einschließlich der Ziffer Null.

Will man also einen gezielten Phasensprung $\Psi$ von beispielsweise einem Viertel der Periode T des von dem Linsenarray 80 abgebildeten Gitters erzeugen, so ist unter Berücksichtigung des Abbildungsmaßstabes $\beta$ des Linsenarrays 80 und der Gitterperiode t des Maßstabgitters 10 der Linsenabstand $A_G$ benachbarter Linsen 81, 82 bzw. die Periodizität des Linsenarrays 80 gemäß der vorstehenden Berechnungsformel (12) zu bestimmen.

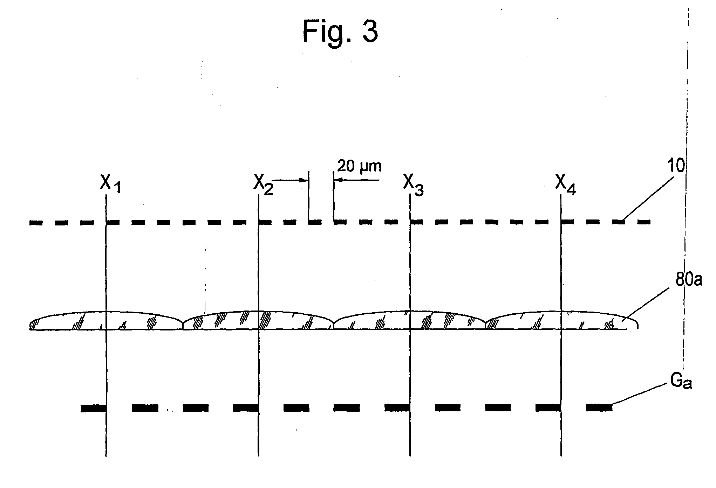

In Fig. 3 sind schematisch zwei mit den vorstehend angegebenen Berechnungsformeln berechnete Gitterperioden oder gegenseitige Abstände benachbarter Linsen eines linearen, periodischen Linsenarrays dargestellt.

Die der Darstellung gemäß Fig. 3 zugrundeliegende Aufgabenstellung besteht darin, ein 20$\mu$m-Maßstabgitter 10, d.h. ein Maßstabgitter mit der Gitterperiode t = 20$\mu$m, durch eine optische Abbildung mittels eines (Mikro-)Linsenarrays in ein Gitter mit dem Abbildungsmaßstab $\beta$ = -2, d.h. einer Gitterperiode von t' = 40$\mu$m abzubilden. Es soll also ein mit der doppelten Gitterperiode t ausgestattetes Abbild des ursprünglichen Maßstabgitters 10 ohne zusätzliche Phasensprünge entstehen. Der Berechnung der Periodizität des Linsenarrays soll weiterhin aus Gründen der numerischen Apertur sowie aus Gründen technologischer Beschränkungen eine Mindestlinsenbreite von 120$\mu$m zugrundegelegt werden.

Zur Bestimmung der Periodizität bzw. des Abstandes $A_G$ benachbarter Linsen des Linsenarrays 80 wird von der vorstehenden Berechnungsformel (11) ausgegangen, wonach

$$A_G = |\beta| * t *(k + i + n) / (|\beta| + 1) \qquad \text{mit } k, i, n \in N$$

Löst man diese Gleichung nach den in der Gleichung enthaltenen natürlichen Zahlen i, k, n auf, so ergibt sich

$$(13) \qquad A_G * (|\beta| + 1) / (|\beta| * t) = (k + i + n)$$

Da i, k und n natürliche Zahlen sind, muss der Ausdruck m ebenfalls eine natürliche Zahl m sein, d.h.

$$(14) \qquad A_G * (|\beta| + 1) / (|\beta| * t) = (k + i + n) = m$$

Die Auflösung der Gleichung 14 nach dem Abstand $A_G$ benachbarter Linsen ergibt

$$(15) \qquad A_G = |\beta| * t * m / (|\beta| + 1) \ \text{mit} \ m \in N$$

In dieser Gleichung sind t und β vorgegeben, so dass bei einer Vorgabe einer bestimmten Mindestlinsenbreite für den Abstand $A_G$ benachbarter Linsen die natürliche Zahl m so zu wählen ist, dass der Abstand $A_G$ benachbarter Linsen den gewünschten Wert der Mindestlinsenbreite erreicht. Dabei ergibt sich die Größe der natürlichen Zahl m aus der Beziehung

$$(16) \qquad m = k + i + n$$

Als guter Annäherungswert für die Summe aus n + i dient der Wert k /|β|. Hieraus folgt:

$$(17) \qquad m = k + k / |\beta| \ \text{oder} \ m = k (1 + 1 / |\beta|)$$

Die Auflösung dieser Gleichung nach k ergibt:

$$(18) \qquad k = m / (1 + 1 / |\beta|)$$

mit k einer natürlichen Zahl wie oben angegeben. Mit den oben angegebenen Werten für $A_G$ = 120 μm, β = -2 und t = 20 μm erhält man:

$$(19) \qquad A_G * (|\beta| + 1) / (|\beta| * t) = m = 120 \ \mu m * (2 + 1) / 2 * 20 \mu m) = 9$$

Daraus folgt:

$$(20) \qquad k * (1 + 1 / |\beta|) = m = 9$$

woraus sich k = 6 und n + i = 3 ergibt.

Da die Bedingung, dass i, k und n natürliche Zahlen sind, durch die Gleichung (20) erfüllt ist, erfüllt demzufolge ein Linsenarray mit einer Periode bzw. einem Abstand zwischen den benachbarten Linsen des Linsenarrays $A_G$ = 120 μm die Anforderungen an eine phasengleiche Gitterabbildung. Fig. 3 verdeutlicht, dass ein Linsenarray 80a mit einer Periode von $A_G$ = 120μm, dessen benachbarte Linsen die optischen Achsen $X_1$ bis $X_4$ aufweisen, ein Gitterbild $G_a$ mit ungestörter Abbildung des Maßstabgitters 10 ergibt.

Wählt man für ein Linsenarray 80b stattdessen einen Abstand benachbarter Linsen bzw. eine Periode von $A_G$ = 140μm, was die Bedingung nach einer Mindestlinsenbreite von 120μm erfüllen würde, so ergibt sich aus der vorstehenden Gleichung (12)

$$(20) \qquad A_G = |\beta| * (t * (k + i + n) + \psi) / (|\beta| + 1)$$

Wobei i, k und n natürliche Zahlen sein müssen.

Hieraus ergibt sich für die Phasenverschiebung ψ :

$$(21) \qquad \psi = (|\beta| + 1) * A_G / |\beta| - t *(k + i + n)$$

Mit den gewählten bzw. angenommenen Werten für den Linsenabstand $A_G$ = 140$\mu$m, den Abmeldungsmaßstab $\beta$ = -2, die Gitterperiode des Maßstabgitters t = 20$\mu$m und die natürlichen Zahlen k = 6 und n + i = 3 erhält man für die Phasenverschiebung $\psi$ aus der vorstehenden Gleichung

$$(22) \qquad \psi = (2 + 1) * 140 \ \mu m - 20 \ \mu m *(6 + 3) = 240 \ \mu m$$

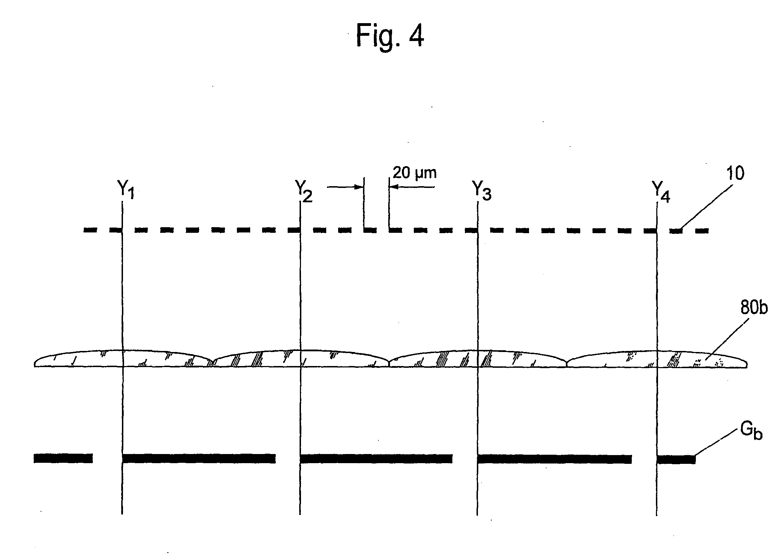

Wie dem in Fig. 4 dargestellten Gitterbild $G_b$ des Linsenarrays 80b mit einem gegenseitigen Abstand der optischen Achsen $Y_1$ bis $Y_4$ benachbarter Linsen bzw. einer Periode $A_G$ = 140$\mu$m zu entnehmen ist, überlappen sich die Bildbereiche zwischen den benachbarten Linsen, so dass ein ausgedehnter Bereich ohne abgebildetes Maßstabsgitter entsteht.

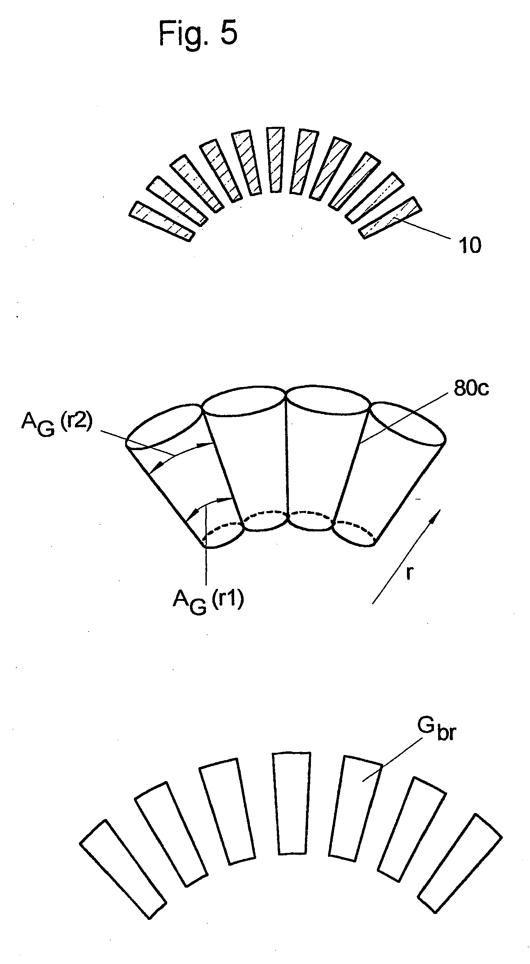

Fig. 5 zeigt schematisch eine radiale Gitterstruktur 10, die mittels eines radialen Linsenarrays 80c in ein radiales Gitterbild $G_{br}$ abgebildet wird.

Das radiale Linsenarray 80c besteht aus einzelnen Mikrolinsen, die im Unterschied zu einem linearen Linsenarray keinen konstanten Abstand $A_G$ entlang ihrer radialen Längsausdehnung besitzen, sondern einen in radialer Richtung veränderlichen, vom jeweiligen Radius r abhängigen Abstand $A_G(r)$.

Um die abzubildende radiale Gitterstruktur der Periode t(r) mit dem Abbildungsmaßstab $\beta(r)$ mittels des radialen Linsenarrays 80c optisch so abzubilden, dass ein Gitter der Periode T(r) = $|\beta(r)| *t(r)$ entsteht, das keine Phasensprünge, -lücken etc. aufweist, müssen die benachbarten Linsen des radialen Linsenarrays 80c einen Abstand

$$A_G (r) = \frac{|\beta(r)| *t(r) *[k + i + n]}{|\beta(r)| + 1}$$

aufweisen mit:

$A_G(r)$     der Gitterperiode des Linsenarrays,
**t(r)**     der Periode der periodischen Gitterstruktur,
$|\beta(r)|$     dem Absolutbetrag des Abbildungsmaßstabes $\beta$ des Linsenarrays (80),
r     dem Radius der Gitteranordnung
**i, k, n**     $\in$ N, d.h. natürlichen Zahlen einschließlich Null.

Fig. 5 zeigt zwei verschiedene, nach der vorstehenden Dimensionierungsregel bestimmte Abstände $A_G$ (r1) und $A_G$ (r2) zwischen auf gleichem Radius befindlichen Mikrolinsen zweier in Umfangsrichtung benachbarter, strahlenförmig von einem gemeinsam Zentrum ausgehenden Mikrolinsenanordnungen. Ein derartiges radiales Linsenarray kann für Drehgeber und Winkelmessgeräte radialer Positionsmesseinrichtungen eingesetzt werden.

**Patentansprüche**

**1.** Optische Positionsmesseinrichtung mit einer Abtasteinheit (2), die eine Lichtquelle (4), eine Abbildungsebene (9) und eine Linsenoptik (8) zur Erzeugung eines Abbildes einer periodischen Gitterstruktur (10) in der Abbildungsebene (9) enthält,
**dadurch gekennzeichnet,**
**dass** die Linsenoptik (8) aus einem periodischen Linsenarray (80) mit der Gitterperiode oder dem gegenseitigen Abstand benachbarter Linsen (81, 82)

$$A_G(r) = \frac{|\beta(r)| \ast [t(r) \ast [k + i + n] + \psi]}{(|\beta(r)| + 1)}$$

besteht, mit

**$A_G(r)$** der Gitterperiode des Linsenarrays,
**$t(r)$** der Periode der periodischen Gitterstruktur (10),
**$|\beta(r)|$** dem Absolutbetrag-des Abbildungsmaßstabes $\beta$ des Linsenarrays (80),
$\psi$ einem vorgebbaren, definierten Phasensprung,
**r** dem Radius der Gitteranordnung, wobei für ein lineares Gitter r = ∞ und $A_G$, t und $\beta$ Konstanten sind,
**i, k, n** $\in$ N, d.h. natürlichen Zahlen einschließlich. Null.

2.  Optische Positionsmesseinrichtung nach Anspruch 1, **dadurch gekennzeichnet, dass** der Phasensprung ($\psi$) ein Bruchteil oder ein Vielfaches der Periode (T) der in der Abbildungsebene (9) abgebildeten periodischen Gitterstruktur (10) ist.

3.  Optische Positionsmesseinrichtung nach Anspruch 1, **gekennzeichnet durch** eine Gitterperiode ohne Phasensprung ($\psi$ = 0)

$$A_G(r) = \frac{|\beta(r)| \ast t(r) \ast [k + i + n]}{(|\beta(r)| + 1)}$$

mit

**$A_G(r)$** der Gitterperiode des Linsenarrays,
**$t(r)$** der Periode der periodischen Gitterstruktur (10),
**$|\beta(r)|$** dem Absolutbetrag des Abbildungsmaßstabes $\beta$ des Linsenarrays (80),
**r** dem Radius der Gitteranordnung, wobei für ein lineares Gitter r = ∞ und $A_G$, t und $\beta$ Konstanten sind,
**i, k, n** $\in$ N, d.h. natürlichen Zahlen einschließlich Null.

4.  Optische Positionsmesseinrichtung nach mindestens einem der voranstehenden Ansprüche, **gekennzeichnet durch** eine Breite

$$B_L(r) = \frac{|\beta(r)| \ast t(r) \ast m}{(|\beta(r)| + 1)}$$

der Linsen (81, 82) des Linsenarrays (80), mit

**$B_L(r)$** der Linsenbreite,
**$t(r)$** der Periode der periodischen Gitterstruktur (10),
**$|\beta(r)|$** dem absoluten Betrag des Abbildungsmaßstabes $\beta$ des Linsenarrays (8),
**r** dem Radius der Gitteranordnung mit r = ∞ bei einem linearen Gitter,
**m** $\in$ N.

5.  Optische Positionsmesseinrichtung nach mindestens einem der voranstehenden Ansprüche, **dadurch gekenn-**

**zeichnet, dass** ein photoelektrischer Detektor (90) in der Abbildungsebene (9) angeordnet ist.

6. Optische Positionsmesseinrichtung nach mindestens einem der voranstehenden Ansprüche 1 bis 4, **dadurch gekennzeichnet, dass** die Abbildungsebene (9) einem weiterführenden optischen System zugeordnet ist.

7. Optische Positionsmesseinrichtung nach mindestens einem der voranstehenden Ansprüche, **dadurch gekennzeichnet, dass** die in der Linsenoptik (8) bzw. dem Linsenarray (80) verwendeten Einzellinsen als refraktive optische Elemente ausgebildet sind.

8. Optische Positionsmesseinrichtung nach mindestens einem der voranstehenden Ansprüche 1 bis 6, **dadurch gekennzeichnet, dass** die in der Linsenoptik (8) bzw. dem Linsenarray (80) verwendeten Einzellinsen als diffraktive optische Elemente ausgebildet sind.

9. Optische Positionsmesseinrichtung nach mindestens einem der voranstehenden Ansprüche **gekennzeichnet durch** einen Maßstab (1), der mindestens ein Strichgitter (10) mit periodischer Gitterstruktur aufweist, und mit einer relativ zum Maßstab (1) beweglichen und das Maßstabgitter (10) abtastenden Abtasteinheit (2), die eine Lichtquelle (4), eine Abbildungsebene (9) und eine im Strahlengang zwischen dem Maßstab (1) und der Abbildungsebene (9) angeordnete Linsenoptik (8) zur Erzeugung eines Abbildes der periodischen Gitterstruktur des Maßstabgitters (10) in der Abbildungsebene (9) enthält,

10. Optische Positionsmesseinrichtung nach Anspruch 9, **dadurch gekennzeichnet, dass** im Strahlengang zwischen dem Maßstab (1) und dem Linsenarray (80) und/oder dem Maßstab (1) und-der-Lichtquelle-(4) eine Abtastplatte (7) mit einer Gitterstruktur angeordnet ist, die eine Gitterkonstante aufweist, die geringfügig von der Gitterkonstante des Maßstabes (1) abweicht, so dass in einer Zwischenbildebene ein virtuelles Streifenmuster resultiert.

11. Optische Positionsmesseinrichtung nach mindestens einem der voranstehenden Ansprüche für eine photoelektrische Abtastung nach dem Auflicht-Messverfahren, **dadurch gekennzeichnet, dass** die Abbildungsebene (9) und die Lichtquelle (4) auf einer gemeinsamen Leiterplatte (3) angeordnet sind.

12. Optische Positionsmesseinrichtung nach Anspruch 11, **dadurch gekennzeichnet, dass** die Leiterplatte (3) winklig zur Ebene des Maßstabs (1) bzw. Maßstabgitters (10) derart angeordnet ist, dass die von der Lichtquelle (4) ausgehenden Lichtstrahlen an einer senkrecht zum Maßstab (1) angeordneten Reflexionsfläche (5) reflektiert, über eine Kondensorlinse (6) auf das Maßstabgitter (10) geworfen, dort reflektiert und mittels des im Wesentlichen parallel zu Leiterplatte (3) angeordneten Linsenarrays (80) das Maßstabgitter (10) mit dem Abbildungsmaßstab ($\beta$) in der Abbildungsebene (9) abbilden.

**Claims**

1. Optical position measuring device having a scanning unit (2) which contains a light source (4), an imaging plane (9) and a lens system (8) for producing an image of a periodic grating structure (10) in the imaging plane (9), **characterised in that** the lens system (8) comprises a periodic lens array (80) having the grating period or the mutual spacing of adjacent lenses (81, 82)

$$A_G\,(r) = \frac{|\beta(r)| \, {}^*[t(r) \, {}^*[k + i + n] + \psi\,]}{(|\beta(r)| + 1)}$$

with

$A_G(r)$ the grating period of the lens array,
$t(r)$ the period of the periodic grating structure (10),
$|\beta(r)|$ the absolute value of the imaging scale $\beta$ of the lens array (80),
$\psi$ a prescribable, defined phase jump,

r the radius of the grating arrangement, for a linear grating r = ∞ and $A_G$, t and β being constants,
i, k, n ∈ N, i.e. natural numbers including zero.

2. Optical position measuring device according to claim 1, **characterised in that** the phase jump (ψ) is a fraction or a multiple of the period (T) of the periodic grating structure (10) which is imaged in the imaging plane (9).

3. Optical position measuring device according to claim 1, **characterised by** a grating period without a phase jump (ψ = 0)

$$A_G(r) = \frac{|\beta(r)| * t(r) * [k + i + n]}{(|\beta(r)| + 1)}$$

with

$A_G(r)$ the grating period of the lens array,
t(r) the period of the periodic grating structure (10),
$|\beta(r)|$ the absolute value of the imaging scale β of the lens array (80),
r the radius of the grating arrangement, for a linear grating r = ∞ and $A_G$, t and β being constants,
i, k, n ∈ N, i.e. natural numbers including zero.

4. Optical position measuring device according to at least one of the preceding claims, **characterised by** a width

$$B_L(r) = \frac{|\beta(r)| * t(r) * m}{(|\beta(r)| + 1)}$$

of the lenses (81, 82) of the lens array (80),
with

$B_L(r)$ the lens width,
t(r) the period of the periodic grating structure (10),
$|\beta(r)|$ the absolute value of the imaging scale β of the lens array (8),
r the radius of the grating arrangement, with r = ∞ in the case of a linear grating,
m ∈ N.

5. Optical position measuring device according to at least one of the preceding claims, **characterised in that** a photoelectric detector (90) is disposed in the imaging plane (9).

6. Optical position measuring device according to at least one of the preceding claims 1 to 4, **characterised in that** the imaging plane (9) is associated with a continuous optical system.

7. Optical position measuring device according to at least one of the preceding claims, **characterised in that** the individual lenses which are used in the lens system (8) or in the lens array (80) are configured as refractive optical elements.

8. Optical position measuring device according to at least one of the preceding claims 1 to 6, **characterised in that** the individual lenses which are used in the lens system (8) or in the lens array (80) are configured as diffractive optical elements.

9. Optical position measuring device according to at least one of the preceding claims, **characterised by** a scale (1) which has at least one ruled grating (10) with a periodic grating structure and having a scanning unit (2) which is moveable relative to the scale (1) and scans the scale grating (10), which scanning unit contains a light source (4), an imaging plane (9) and a lens system (8) which is disposed in the beam path between the scale (1) and the imaging plane (9) in order to produce an image of the periodic grating structure of the scale grating (10) in the imaging plane (9).

10. Optical position measuring device according to claim 9, **characterised in that**, in the beam path between the scale (1) and the lens array (80) and/or the scale (1) and the light source (4), there is disposed a scanning plate (7) with a grating structure which has a grating constant which deviates slightly from the grating constant of the scale (1), so that a virtual stripe pattern results in an intermediate image plane.

11. Optical position measuring device according to at least one of the preceding claims for photoelectric scanning according to the incident light measuring method, **characterised in that** the imaging plane (9) and the light source (4) are disposed on a common printed circuit board (3).

12. Optical position measuring device according to claim 11, **characterised in that** the printed circuit board (3) is disposed at an angle relative to the plane of the scale (1) or of the scale grating (10) such that the light beams originating from the light source (4), reflected on a reflection surface (5) which is disposed perpendicular to the scale (1), projected via a condenser lens (6) onto the scale grating (10), reflected there and, by means of the lens array (80) which is disposed substantially parallel to the printed circuit board (3), image the scale grating (10) with the imaging scale ($\beta$) in the imaging plane (9).

## Revendications

1. Dispositif optique de mesure de position, comprenant une unité de balayage (2) qui comporte une source lumineuse (4), un plan de reproduction (9) et un système optique à lentilles (8) pour générer une reproduction d'une structure de réseau (10) périodique, dans le plan de reproduction (9),
   **caractérisé en ce que**
   le système optique à lentilles (8) se compose d'un groupe de lentilles (80) périodique présentant la période de réseau ou l'espacement réciproque suivant(e) de lentilles (81, 82) voisines

$$A_G(r) = \frac{\left| \beta(r) \right|{}^*[t(r){}^*[k + i + n] + \psi]}{(\left| \beta(r) \right| + 1)}$$

avec

A_G(r) période de réseau du groupe de lentilles,
t(r) période de la structure de réseau (10) périodique,
$|\beta(r)|$ valeur absolue de l'échelle de reproduction $\beta$ du groupe de lentilles (80),
$\psi$ variation de phase brusque définie, pouvant être prédéterminée,
r rayon de l'agencement de réseau, sachant que pour un réseau linéaire, $r = \infty$ et $A_G$, t et $\beta$ sont des constantes,
i, k, n $\in$ N, c'est-à-dire des entiers naturels, y compris zéro.

2. Dispositif optique de mesure de position selon la revendication 1, **caractérisé en ce que** la variation de phase brusque ($\psi$) correspond à une fraction ou à un multiple de la période (T) de la structure de réseau (10) périodique représentée dans le plan de reproduction (9).

3. Dispositif optique de mesure de position selon la revendication 1, **caractérisé en ce qu'**il présente une période de réseau sans variation de phase brusque ($\psi = 0$)

$$A_G(r) = \frac{|\beta(r)|^* t(r)^*[k + i + n]}{(|\beta(r)| + 1)}$$

avec

$A_G(r)$ période de réseau du groupe de lentilles,
$t(r)$ période de la structure de réseau (10) périodique,
$|\beta(r)|$ valeur absolue de l'échelle de reproduction $\beta$ du groupe de lentilles (80),
r rayon de l'agencement de réseau, sachant que pour un réseau linéaire, $r = \infty$ et $A_G$, t et $\beta$ sont des constantes,
i, k, n $\in$ N, c'est-à-dire des entiers naturels, y compris zéro.

4. Dispositif optique de mesure de position selon au moins une des revendications précédentes, **caractérisé en ce qu'**il présente une largeur

$$B_L(r) = \frac{|\beta(r)|^* t(r)^* m}{(|\beta(r)| + 1)}$$

des lentilles (81, 82) du groupe de lentilles (80), avec

$B_L(r)$ largeur de lentille,
$t(r)$ période de la structure de réseau (10) périodique,
$|\beta(r)|$ valeur absolue de l'échelle de reproduction $\beta$ du groupe de lentilles (80),
r rayon de l'agencement de réseau, avec r = co pour un réseau linéaire,
m $\in$ N.

5. Dispositif optique de mesure de position selon au moins une des revendications précédentes, **caractérisé en ce qu'**un détecteur photoélectrique (90) est disposé dans le plan de reproduction (9).

6. Dispositif optique de mesure de position selon au moins une des revendications précédentes 1 à 4, **caractérisé en ce que** le plan de reproduction (9) est associé à un système optique complémentaire.

7. Dispositif optique de mesure de position selon au moins une des revendications précédentes, **caractérisé en ce que** les lentilles individuelles utilisées dans le système optique à lentilles (8) ou le groupe de lentilles (80) sont réalisées sous forme d'éléments optiques réfractifs.

8. Dispositif optique de mesure de position selon au moins une des revendications précédentes 1 à 6, **caractérisé en ce que** les lentilles individuelles utilisées dans le système optique à lentilles (8) ou le groupe de lentilles (80) sont réalisées sous forme d'éléments optiques diffractifs.

9. Dispositif optique de mesure de position selon au moins une des revendications précédentes, **caractérisé en ce qu'**il comprend une règle de mesure (1), qui présente au moins un réseau de traits (10) à structure de réseau périodique, et une unité de balayage (2) qui peut être déplacée par rapport à la règle de mesure (1), en balayant le réseau de règle (10), et comporte une source lumineuse (4), un plan de reproduction (9) et un système optique à lentilles (8) disposé dans la trajectoire des rayons entre la règle de mesure (1) et le plan de reproduction (9) et destiné à générer une reproduction de la structure périodique du réseau de règle (10), dans le plan de reproduction (9).

10. Dispositif optique de mesure de position selon la revendication 9, **caractérisé en ce que** dans la trajectoire des rayons entre la règle de mesure (1) et le groupe de lentilles (80) et/ou entre la règle (1) et la source lumineuse (4), il est prévu un réticule de balayage (7) avec une structure de réseau présentant une constante de réseau qui est légèrement différente de la constante de réseau de la règle de mesure (1), de sorte qu'il en résulte un motif de franges virtuel dans un plan d'image intermédiaire.

11. Dispositif optique de mesure de position selon au moins une des revendication précédentes, pour effectuer un balayage photoélectrique selon le procédé de mesure par réflexion, **caractérisé en ce que** le plan de reproduction (9) et la source lumineuse (4) sont disposés sur une carte de circuits imprimés (3) commune.

12. Dispositif optique de mesure de position selon la revendication 11, **caractérisé en ce que** la carte de circuits imprimés (3) est disposée de manière à former un angle avec le plan de la règle de mesure (1) et du réseau de règle (10), de telle sorte que les rayons lumineux partant de la source lumineuse (4) soient réfléchis par une surface de réflexion (5) perpendiculaire à la règle (1), soient renvoyés par l'intermédiaire d'une lentille condenseur (6) sur le réseau de règle (10) et soient réfléchis sur cette surface et reproduisent le réseau de règle (10) avec l'échelle de reproduction (β) dans le plan de reproduction (9), au moyen du groupe de lentilles (80) disposé sensiblement parallèlement à la carte de circuits imprimés (3).

Fig. 1

# Fig. 2

Fig. 3

EP 1 497 609 B1

EP 1 497 609 B1

## Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2056660 A
- US 6172753 B
- DE 10022619 A1